# EUROPÄISCHE PATENTSCHRIFT

(11) **EP 1 075 991 B1**
(45) Veröffentlichungstag und Bekanntmachung des Hinweises auf die Patenterteilung: **03.03.2004**
(21) Anmeldenummer: 00113780.1
(22) Anmeldetag: 29.06.2000
(51) Int. Cl.: B60T 1/06, B60B 27/00, B62D 7/18

(54) **Trägeranordnung für Kraftfahrzeuge**
Support assembly for motor vehicles
Dispositif de support pour véhicules automobiles

(30) Priorität: 11.08.1999 DE 19937336
(43) Veröffentlichungstag der Anmeldung: 14.02.2001
(73) Patentinhaber: Georg Fischer Fahrzeugtechnik AG, 8201 Schaffhausen (CH)
(72) Erfinder: Mahnig, Fritz, 8200 Schaffhausen (CH); Rau, Guido, 78464 Konstanz (DE)
(74) Vertreter: Weiss, Wolfgang, Dr.

(56) Entgegenhaltungen:
- DE-A- 19 538 212
- US-A- 4 722 540

## Beschreibung

Die Erfindung bezieht sich auf eine Trägeranordnung umfassend ein erstes Trägerteil zur Verbindung mit einem Federbein und mit einer Lenkvorrichtung eines Kraftfahrzeuges und ein zweites Trägerteil zur Aufnahme einer Radlagerung, wobei das erste Trägerteil und das zweite Trägerteil in einem Metallgussverfahren ausgebildete Wandbereiche aufweisen, wobei das erste Trägerteil und das zweite Trägerteil mittels Schrauben miteinander verbunden sind und wobei am zweiten Trägerteil zwei Bremsträgerarme zur Befestigung der Bremsvorrichtung ausgebildet sind.

Im Kraftfahrzeugbau werden viele Einzelteile zusammengebaut, die für unterschiedliche Funktionen ausgelegt werden und entsprechend unterschiedliche Sicherheitsvorschriften erfüllen müssen. Jede Gewichtseinsparung bei der Auslegung ist willkommen, da hierdurch beim Betrieb des Kraftfahrzeuges eine Treibstoffmenge eingespart werden kann, die unter Umständen die Primärenergiemenge, die für die Herstellung des Kraftfahrzeuges aufgewendet werden muss, bei weiten übertrifft. Auch in bezug auf den Schutz der Umwelt sind eine Gewichtseinsparung und eine Treibstoffeinsparung wünschenswert. Je kleiner das Fahrzeuggewicht, desto geringer ist der Verschleiss an dem Fahrzeug und an der Strasse und desto einfacher ist die Entsorgung am Ende der Lebensdauer des Fahrzeuges. Bei der Gewichtseinsparung dürfen jedoch die Sicherheitsaspekte nicht aus dem Auge gelassen werden. Die einzelnen Teile des Kraftfahrzeuges müssen bei einem möglichst geringen Gewicht eine möglichst hohe Sicherheit gewährleisten.

Aus der DE 197 42 027 A1 ist eine gattungsgemässe Trägeranordnung bekannt. Die Trägeranordnung besteht im wesentlichen aus einem ersten Gussformteil, das das Schwenklager trägt und einem zweiten Gussformteil, das die Radlagerung für die Radachse und den damit verbundenen Radflansch aufnimmt und Arme für die Befestigung der Bremsbacken aufweist. Die zwei Gussformteile sind mittels Schrauben miteinander verbunden. Beim Zusammenschrauben der zwei Gussformteile übt einen Schulteransatz, der plastisch verformbar ist, Druck auf die Stirnseite des Radlagers aus. Vor allem das erste Gussformteil ist, zumindest im Bereich zwischen der Verschraubung und dem Schwenklager, mit relativ viel Material und mit relativ grossen Wandstärken ausgeführt.

Aus der DE 195 38 212 ist eine Achsbaugruppe bekannt. Die Achsbaugruppe besteht aus einem Achsschenkel, der aus einer Leichtmetalllegierung hergestellt ist und einem Kombinationsbauteil, das aus Stahl hergestellt ist. Um Gewicht einzusparen wird der erste Bremsträgerarm, der die Kräfte bei der Bremsung einer Vorwärtsfahrt aufnimmt, am schwereren Kombinationsbauteil ausgebildet und der zweite Bremsträgerarm, der die Kräfte bei der Bremsung einer Rückwärtsfahrt aufnimmt, am leichteren Achsschenkel ausgebildet.

Aus der US 4 722 540 ist eine weitere Achsschenkelanordnung bekannt. Die Anordnung besteht aus einem ersten Teil, der die Lagerung trägt und einem zweiten Teil, der mit der Lenkung verbunden wird. Um Gewicht einzusparen wird der zweite Teil, das Achsschenkelgehäuse, nicht gegossen, sondern aus Stahlblech gepresst.

Ausgehend von diesem Stand der Technik ist es Aufgabe der Erfindung, eine Trägeranordnung für Kraftfahrzeuge anzugeben, die bei einem möglichst kleinen Gesamtgewicht eine möglichst hohe Festigkeit aufweist, kostengünstig herzustellen ist und die Verwendung von Radlagem der ersten Generation erlaubt.

Diese Aufgabe wird gelöst durch eine Trägeranordnung umfassend ein erstes Trägerteil zur Verbindung mit einem Federbein und mit einer Lenkvorrichtung eines Kraftfahrzeuges und ein zweites Trägerteil zur Aufnahme einer Radlagerung, wobei das erste Trägerteil und das zweite Trägerteil in einem Metallgussverfahren ausgebildete Wandbereiche aufweisen, wobei das erste Trägerteil und das zweite Trägerteil mittels Schrauben miteinander verbunden sind und wobei am zweiten Trägerteil zwei Bremsträgerarme zur Befestigung der Bremsvorrichtung ausgebildet sind und wobei der eine Bremsträgerarm Wandbereiche aufweist, die wesentlich dünner ausgebildet sind als die entsprechenden Wandbereiche des anderen Bremsträgerarmes.

Bevorzugte Weiterbildungen der Erfindung ergeben sich aus den abhängigen Ansprüchen.

Es ist von Vorteil, dass im Giessverfahren zur Herstellung der Trägeranordnung möglichst wenig Material eingesetzt wird. Dies wird dadurch erreicht, dass der eine Bremsträgerarm Wandbereiche aufweist, die mindestens 20%, vorzugsweise mindestens 40% dünner ausgebildet sind als die entsprechenden Wandbereiche des anderen Bremsträgerarmes. Die Bremsträgerarme können entsprechend der Belastung der Bremsvorrichtung unterschiedlich ausgelegt werden. Der Arm, der die Bremsklötzchen trägt, die in der Fahrtrichtung vorwärts wirken, muss für eine wesentlich grössere Bremskraft ausgelegt werden als der Arm für die Bremsklötzchen, die in der Fahrtrichtung rückwärts wirken. Dies wird auch dadurch erreicht, dass am ersten Trägerteil zur Verbindung mit dem Federbein und der Lenkvorrichtung eines Kraftfahrzeuges weitere Wandbereiche ausgebildet sind, die bereichsweise wesentlich dünner ausgebildet sind als die benachbarten Wandbereiche des zweiten Trägerteils, wobei die Wandbereiche des ersten Trägerteils mit den Wandbereichen des zweiten Trägerteils einen Winkel < 180° einschliessen.

Die Trägeranordnung weist unterschiedliche in einem Metallgussverfahren ausgebildete Wandbereiche auf, die benachbart zueinander angeordnet sind und derart ausgebildet sind, dass die Trägeranordnung recht verschiedenartige Funktionen ausüben kann, beispielsweise die Verbindung mit dem Federbein und mit der Lenkvorrichtung des Kraftfahrzeuges, die Aufnahme des Radlagers und die Befestigung der Bremsvorrichtung.

Weil die Trägeranordnung aus zwei Trägerteile hergestellt wird, die miteinander verschraubt werden, müssen, im Gegensatz zu einer Trägeranordnung, die aus einem Teil hergestellt wird, vier statt zwei Formen gebaut werden. Der Mehraufwand für den Formenbau und für die Schraubverbindung wird jedoch wettgemacht durch den Erhalt einer doppelten Anzahl von Freiheitsgraden. Schwierig herzustellende Hinterschneidungen zwischen Wandbereiche, die unter einem Winkel zueinander angeordnet sind und die extra Formkerne benötigen würden, fallen weg. Gleichzeitig kann im Bereich der Hinterschneidungen Material und somit Gewicht gespart werden. Der Ort des Angusses kann für beide Trägerteile separat und deshalb günstiger für die Giess- und Kühlbedingungen gewählt werden. Auch die Formteilungslinie kann für beide Trägerteile separat und deshalb günstiger für die Entformung gewählt werden. Die Trennlinie zwischen den beiden Trägerteilen kann so festgelegt werden, dass sowohl für das erste Trägerteil als auch für das zweite Trägerteil eine optimale Auslegung in bezug auf Sicherheit und Gewichtseinsparung möglich wird. Weil zwei einzelne Trägerteile hergestellt werden, kann für jedes Trägerteil eine der Beanspruchung entsprechende optimale Werkstoffwahl getroffen werden. Durch den modularen Aufbau können verschiedene Einzelteile mit einander kombiniert werden. Durch diese Kombinationsmöglichkeit wird in der Produktion und in der Lagerhaltung eine höhere Flexibilität erreicht.

Ein Ausführungsbeispiel der Erfindung wird anhand der Figuren beschrieben. Es zeigen:
Figur 1 eine Sicht auf eine erfindungsgemässe Trägeranordnung,
Figur 2 einen Schnitt durch die Trägeranordnung entlang der Linie AA von Figur 1,
Figur 3 einen Schnitt durch die Trägeranordnung entlang der Linie BB von Figur 1 und
Figur 4 eine weitere Sicht auf die Trägeranordnung von Figur 1.

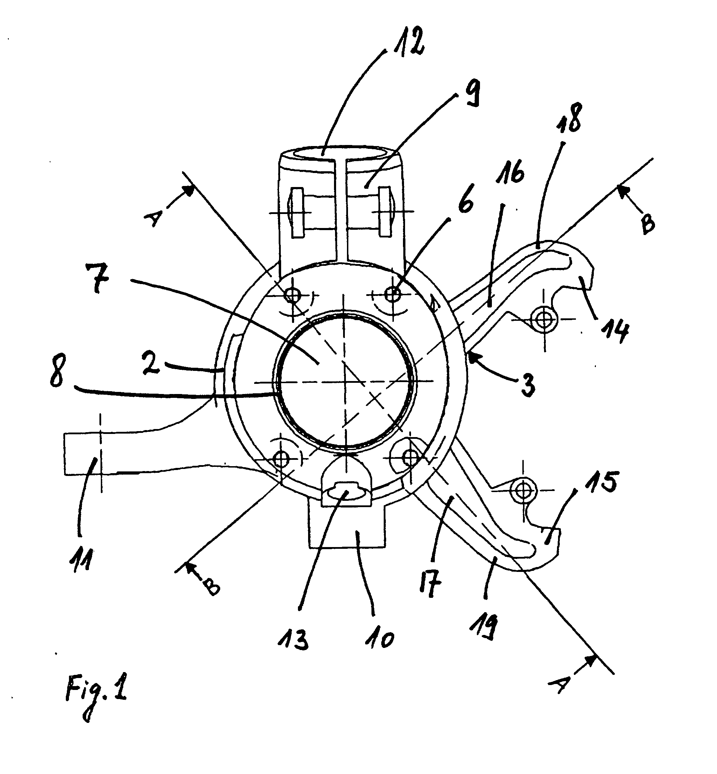

In Figur 1 ist eine Trägeranordnung 1 dargestellt, die in einem Personenwagen eingesetzt wird um die tragende Verbindung zwischen einer Antriebswelle und einem angetriebenen Rad herzustellen. Ähnliche, einfacher aufgebaute Trägeranordnungen werden auch an den nicht angetriebenen Rädem eingesetzt. Die Trägeranordnung 1 ist aus einem ersten Trägerteil 2 und einem zweiten Trägerteil 3 zusammengesetzt. In Figur 1 liegt das zweite Trägerteil 3 unterhalb des ersten Trägerteils 2. Die Figur 1 stellt die Trägeranordnung 1 dar, wie sie aus dem Innem des Fahrzeugunterbaus von der Antriebsvorrichtung in Richtung auf dem nicht dargestellten angetriebenen Rad gesehen wird. Das erste Trägerteil 2 ist mittels Schrauben 5 mit dem zweiten Trägerteil 3 verbunden. In Figur 1 sind vier Bohrungen 6 ersichtlich, in die die Schrauben 5 von unten her, d.h. von aussen her, zur Befestigung des unten liegenden, d.h. des im Fahrzeug innen liegenden, zweiten Trägerteils 3 an dem oben liegenden ersten Trägerteil 2 eingeschraubt wurden. Die Trägeranordnung 1 weist eine zentral zwischen den Bohrungen 6 liegende kreisförmige Öffnung 7 auf.

Die Öffnung 7 weist im ersten Trägerteil 2 einen kleineren Durchmesser auf als in einem wesentlichen Bereich des zweiten Trägerteils 3. Hiermit wird erreicht, dass eine Radlagerung, die in die Öffnung 7 im zweiten Trägerteil 3 eingebracht werden kann, an einem Anschlag 8 des ersten Trägerteils 2 anstosst. Die Radlagerung, die hier ebenfalls nicht dargestellt ist, dient zur lagernden Aufnahme eines Achszapfens des Rades. Die Radiagerung wird durch die Verschraubung des ersten Trägerteils 2 mit dem zweiten Trägerteil 3 in der Öffnung 7 zwischen dem Anschlag 8 des ersten Trägerteils 2 und einem weiteren Anschlag 28 des zweiten Trägerteils 3 eingespannt und festgehalten. Im Falle eines nicht angetriebenen Rades kann im ersten Trägerteil 2 die Öffnung 7 nachträglich mit einem nicht dargestellten Deckel abgedeckt werden. Im Falle eines angetriebenen Rades wird der Achszapfen im Inneren des Fahrzeuges mit der Antriebswelle verbunden.

Das erste Trägerteil 2 weist am Umfang drei Befestigungs- bzw. Aufnahmebereiche 9, 10, 11 auf. Der erste Befestigungsbereich 9 und der zweite Befestigungsbereich 10 sind auf einander gegenüberliegenden Seiten der Oeffnung 7 angeordnet. Der erste Befestigungsbereich 9 und der zweite Befestigungsbereich 10 weisen erste Befestigungsöffnungen 12 und zweite Befestigungsöffnungen 13 auf, die in ihrer axialen Richtung parallel zueinander verlaufen und unter einem Winkel zur axialen Richtung des Achszapfens angeordnet sind. In dem ersten Befestigungsbereich 9 wird ein Anschlussteil des Federbeines aufgenommen und befestigt und in dem zweiten Befestigungsbereich 10 wird ein weiteres Anschlussteil des Querlenkers aufgenommen. Der erste Befestigungsbereich 9 weist einen Schlitz auf und auf gegenüberliegenden Seiten des Schlitzes je eine Aufnahme für eine Klemmschraube und einer Mutter zur klemmenden Befestigung des Federbeines. Am dritten Befestigungsbereich 11 werden weitere Bestandteile der Lenkung befestigt. Zur Lenkung gehören unter anderem eine Spurstange und ein Lenkarm. Hiermit wird die Befestigung und die Einstellung der Lenkgeometrie des Rades erreicht.

Am zweiten Trägerteil 3 sind ein erster Bremsträgerarm 14 und ein zweiter Bremsträgerarm 15 ausgebildet. Die Bremsträgerarme 14, 15 dienen zur Befestigung der Bremsvorrichtung. Der erste Bremsträgerarm 14 dient zur Befestigung der Bremsklötzchen für die Bremsen, die bei der Fahrt in der rückwärtigen Richtung des Fahrzeuges benötigt werden und der zweite Bremsträgerarm 15 dient zur Befestigung der Bremsklötzchen für die Bremsen, die in der normalen Fahrtrichtung vorwärts benötigt werden. Die Bremsträgerarme 14,15 sind mit einem im wesentlichen U-förmigen Profil 16,17 mit dem zweiten Trägerteil 3 verbunden. Der erste Bremsträgerarm 14 weist Wandbereiche 18 auf, die wesentlich dünner ausgebildet sind als die entsprechenden Wandbereiche 19 des zweiten Bremsträgerarmes 15. Weil die Kräfte, die beim Bremsen des Fahrzeuges in Vorwärtsrichtung wirken, viel grösser sind als in der Rückwärtsrichtung des Fahrzeuges, ist der erste Wandbereich 18 mindestens 20%, vorzugsweise mindestens 40% dünner ausgebildet als der zweite Wandbereich 19. Hiermit wird angedeutet, dass, unter Einhaltung aller Sicherheitsvorschriften, erhebliche Gewichtseinsparungen möglich sind.

Weitere Gewichtseinsparungen sind auch möglich dank einer gezielten Werkstoffauswahl für das erste Trägerteil 2 und das zweite Trägerteil 3. Weil die Kräfte, die auf dem ersten Trägerteil 2 wirken im allgemeinen niedriger sind als die Kräfte, die auf dem zweiten Trägerteil 3 wirken, kann das erste Trägerteil 2 beispielsweise aus einem Metallguss einer Aluminium- oder Magnesiumlegierung hergestellt werden. Lediglich das zweite Trägerteil 3, dass die Bremskräfte aufnehmen muss und das in der Öffnung 7 ein Radlager der ersten Generation aus Stahl aufnehmen muss, wird aus einem Metallguss einer Gusseisenlegierung mit Kugelgraphit hergestellt.

Durch die zweiteilige Ausführung der Trägeranordnung 1 können die Werkstoffe entsprechend der Funktion der Trägerteile 2, 3 gewählt werden. Auch kann in der Auslegung für jedes Trägerteil 2, 3 gezielt dort Material eingespart werden, wo es aufgrund der Funktion erlaubt ist. Es kann Material weggelassen werden, das bei einem herkömmlichen einteiligen Gussverfahren, vor allem wegen der komplizierten geometrischen Anordnung der Befestigungsarme 9, 10, 11 und der Bremsträgerarme 15, 16 nicht weggelassen werden konnte.

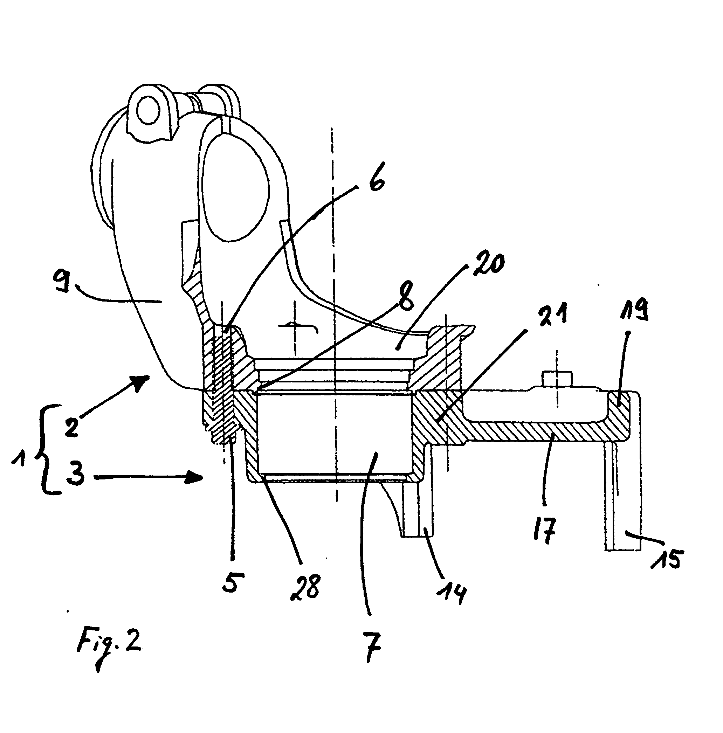

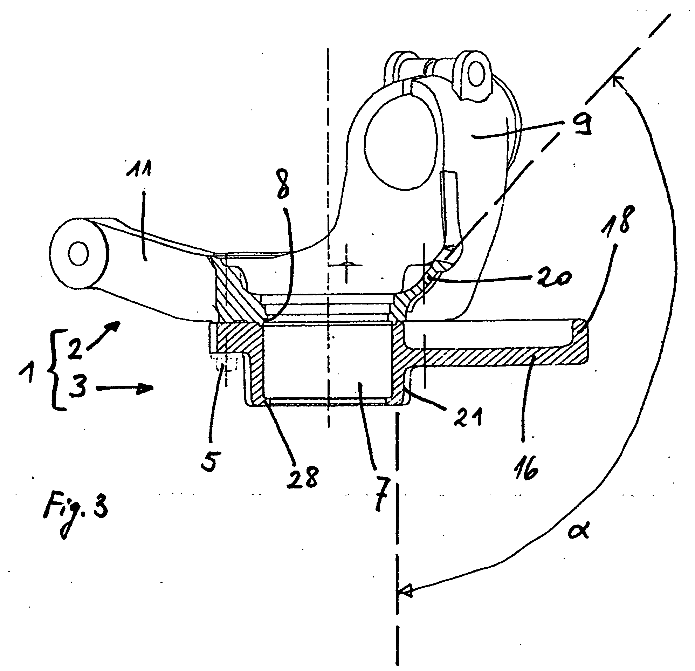

In Figur 2 und Figur 3 sind Schnitte durch die Trägeranordnung 1 entlang der Linie AA und entlang der Linie BB von Figur 1 dargestellt. Am ersten Trägerteil 2 ist der Befestigungsarm 9 zur Befestigung des Federbeines dargestellt. Im Schnitt von Figur 2 ist auch ersichtlich, wie die Trägerteile 2, 3 mittels Schrauben 5 in Bohrungen 6 miteinander verbunden sind. Die Trennlinie zwischen dem ersten Trägerteil 2 aus Leichtmetall und dem zweiten Trägerteil 3 aus einer Gusseisenlegierung mit Kugelgraphit kann so gewählt werden, dass die Gewichtseinsparung maximal wird. Am Befestigungsarm 9 ist ersichtlich, wie weitere Wandbereiche 20 des ersten Trägerteils 2, die unter einem Winkel zu weiteren Wandbereichen 21 des zweiten Trägerteils 3 angeordnet sind, wesentlich dünner ausgebildet sind als die weiteren Wandbereiche 21 des zweiten Trägerteils 3. Vor allem im Bereich der Anbindung der Bremsträgerarme 14, 15 an dem zweiten Trägerteil 3 ist eine erhebliche Materialeinsparung möglich, weil hier gegenüber dem herkömmlichen einteiligen Gussverfahren keine Hinterschneidungen mehr nötig sind. Der Formenbau für die zweiteilige Herstellung wird weiter vereinfacht, weil gegenüber der einteilige Herstellung keine Kemeinsätze erforderlich sind.

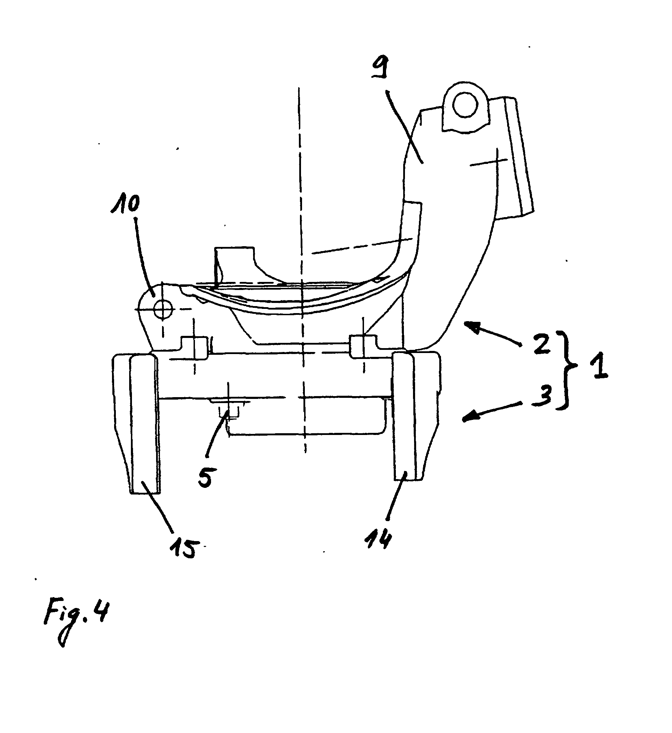

In Figur 4 ist die Trägeranordnung 1 gesehen von einer Seite dargestellt. Es ist ersichtlich, wie durch die geschickte Wahl der Trennlinie zwischen dem ersten Trägerteil und dem zweiten Trägerteil die Formgebung vereinfacht werden kann und in welchen Wandbereichen Material weggelassen werden kann. Insgesamt kann mit einer zweiteiligen Herstellung bis zu 35 % Gewichtserspamis gegenüber der einteiligen Herstellung erreicht werden.

## Patentansprüche

1. Trägeranordnung (1) umfassend ein erstes Trägerteil (2) zur Verbindung mit einem Federbein und mit einer Lenkvorrichtung eines Kraftfahrzeuges und ein zweites Trägerteil (3) zur Aufnahme einer Radlagerung, wobei das erste Trägerteil (2) und das zweite Trägerteil (3) in einem Metallgussverfahren ausgebildete Wandbereiche aufweisen, wobei das erste Trägerteil (2) und das zweite Trägerteil (3) mittels Schrauben (5) miteinander verbunden sind und wobei am zweiten Trägerteil (3) zwei Bremsträgerarme (14,15) zur Befestigung der Bremsvorrichtung ausgebildet sind, **dadurch gekennzeichnet, dass**, der eine Bremsträgerarm (14) Wandbereiche (18) aufweist, die wesentlich dünner ausgebildet sind als die entsprechenden Wandbereiche (19) des anderen Bremsträgerarmes (15) und dass am ersten Trägerteil (2) weitere Wandbereiche (20) ausgebildet sind, die bereichsweise wesentlich dünner ausgebildet sind als die benachbarten Wandbereiche (21) des zweiten Trägerteils (3), wobei die Wandbereiche (20) des ersten Trägerteils (2) mit den Wandbereichen (21) des zweiten Trägerteils (3) einen Winkel < 180° einschliessen.

2. Trägeranordnung nach dem Anspruch 1, **dadurch gekennzeichnet, dass** der eine Bremsträgerarm (14) Wandbereiche (18) aufweist, die mindestens 20% dünner ausgebildet sind als die entsprechenden Wandbereiche (19) des anderen Bremsträgerarmes (15).

3. Trägeranordnung nach dem Anspruch 1, **dadurch gekennzeichnet, dass** der eine Bremsträgerarm (14) Wandbereiche (18) aufweist, die mindestens 20%, vorzugsweise mindestens 40%, dünner ausgebildet sind als die entsprechenden Wandbereiche (19) des anderen Bremsträgerarmes (15).

4. Trägeranordnung nach einem der Ansprüche 1 bis 3, **dadurch gekennzeichnet, dass** am ersten Trägerteil (2) zur Verbindung mit dem Federbein und der Lenkvorrichtung eines Kraftfahrzeuges weitere Wandbereiche (20) ausgebildet sind, die bereichsweise wesentlich dünner ausgebildet sind als die benachbarten Wandbereiche (21) des zweiten Trägerteils (3), wobei die Wandbereiche (20) des ersten Trägerteils (2) mit den Wandbereichen (21) des zweiten Trägerteils (3) einen Winkel < 180° einschliessen.

5. Trägeranordnung nach einem der Ansprüche 1 bis 4, **dadurch gekennzeichnet, dass** weitere Wandbereiche des ersten Trägerteils (2) und/oder des zweiten Trägerteils (3) Durchbrüche aufweisen.

6. Trägeranordnung nach einem der Ansprüche 1 bis 5, **dadurch gekennzeichnet, dass** Wandbereiche des ersten Trägerteils (2) und/oder des zweiten Trägerteils (3) ihrer tragenden Funktion entsprechend dünner oder dicker ausgebildet sind.

7. Trägeranordnung nach einem der Ansprüche 1 bis 6, **dadurch gekennzeichnet, dass** Wandbereiche des ersten Trägerteils (2) und/oder des zweiten Trägerteils (3) ein ihrer tragenden Funktion entsprechendes Profil aufweisen.

8. Trägeranordnung nach einem der Ansprüche 1 bis 7, **dadurch gekennzeichnet, dass** das erste Trägerteil (2) in einem Gussverfahren aus einer Aluminiumlegierung ausgebildet ist.

9. Trägeranordnung nach einem der Ansprüche 1 bis 8, **dadurch gekennzeichnet, dass** das zweite Trägerteil (3) in einem Gussverfahren aus einer Gusseisenlegierung mit Kugelgraphit ausgebildet ist.

## Claims

1. Support arrangement (1) comprising a first support part (2) for connection to a suspension strut and to a steering device of a motor vehicle, and a second support part (3) for holding a wheel bearing, the first support part (2) and the second support part (3) having wall regions formed in a metal-casting process, the first support part (2) and the second support part (3) being connected to each other by means of screws (5), and two brake support arms (14, 15) being formed on the second support part (3) for detachment of the brake device, **characterized in that** the one brake support arm (14) has wall regions (18) which are formed such that they are substantially thinner than the corresponding wall regions (19) of the other brake support arm (15) and **in that** further wall regions (20) are formed on the first support part (2), said wall regions being substantially thinner in some areas than the adjacent wall regions (21) of the second support part (3), the wall regions (20) of the first support part (2) enclosing an angle < 180° with the wall regions (21) of the second support part (3).

2. Support arrangement according to Claim 1, **characterized in that** the one brake support arm (14) has wall regions (18) which are formed such that they are at least 20% thinner than the corresponding wall regions (19) of the other brake support arm (15).

3. Support arrangement according to Claim 1, **characterized in that** the one brake support arm (14) has wall regions (18) which are formed such that they are at least 20%, preferably at least 40%, thinner than the corresponding wall regions (19) of the other brake support arm (15).

4. Support arrangement according to one of Claims 1 to 3, **characterized in that** further wall regions (20) are formed on the first support part (2) for connection to the suspension strut and to the steering device of a motor vehicle, said wall regions being substantially thinner in some areas than the adjacent wall regions (21) of the second support part (3), the wall regions (20) of the first support part (2) enclosing an angle < 180° with the wall regions (21) of the second support part (3).

5. Support arrangement according to one of Claims 1 to 4, **characterized in that** further wall regions of the first support part (2) and/or of the second support part (3) have apertures.

6. Support arrangement according to one of Claims 1 to 5, **characterized in that** wall regions of the first support part (2) and/or of the second support part (3) are formed such that they are thinner or thicker corresponding to their supporting function.

7. Support arrangement according to one of Claims 1 to 6, **characterized in that** wall regions of the first support part (2) and/or of the second support part (3) have a profile corresponding to their supporting function.

8. Support arrangement according to one of Claims 1 to 7, **characterized in that** the first support part (2) is formed in a casting process from an aluminium alloy.

9. Support arrangement according to one of Claims 1 to 8, **characterized in that** the second support part (3) is formed in a casting process from a cast iron alloy with nodular graphite.

## Revendications

1. Dispositif de support (1) comprenant un premier élément support (2) prévu pour une liaison avec une barre de suspension et un dispositif directionnel d'un véhicule automobile, ainsi qu'un second élément support (3) en tant que logement d'un palier à roulement de roue, du type selon lequel le premier élément support (2) et le second élément support (3) présentent des zones de paroi conformées par un procédé de fonderie, du type selon lequel le premier élément support (2) et le second élément support (3) sont mutuellement solidaires au moyen de vis (5) et du type selon lequel sur le second élément support (3) sont conformés deux bras-support de frein (14, 15) pour la fixation du dispositif de freinage, **caractérisé en ce que** l'un des bras-support de frein (14) présente des zones de paroi (18) qui sont substantiellement plus minces que les zones de paroi (19) correspondantes de l'autre bras-support de frein (15), et **en ce que** sur le premier élément support (2) sont conformées d'autres zones de paroi (20), qui sont substantiellement plus minces dans certaines portions que les zones de paroi voisines (21) du second élément support (3), lesdites zones de paroi (20) du premier élément support (2) se raccordant aux zones de paroi (21) du second élément support (3) selon un angle <180°.

2. Dispositif de support selon la revendication 1, **caractérisé en ce que** l'un des bras-support de frein (14) présente des zones de paroi (18), qui ont une conformation plus fine d'au moins 20 % que les zones de paroi correspondantes (19) de l'autre bras-support de frein (15).

3. Dispositif de support selon la revendication 1, **caractérisé en ce que** l'un des bras-support de frein (14) présente des zones de paroi (18), qui ont une conformation plus fine d'au moins 20 %, et de préférence d'au moins 40 %, que les zones de paroi correspondantes (19) de l'autre bras-support de frein (15).

4. Dispositif de support selon l'une des revendications 1 à 3, **caractérisé en ce que** sur le premier élément support (2), prévu pour une liaison avec ladite barre de suspension et ledit dispositif directionnel d'un véhicule automobile, sont conformées d'autres zones de paroi (20), qui sont substantiellement plus minces dans certaines portions que les zones de paroi voisines (21) du second élément support (3), lesdites zones de paroi (20) du premier élément support (2) se raccordant aux zones de paroi (21) du second élément support (3) selon un angle <180°.

5. Dispositif de support selon l'une des revendications 1 à 4, **caractérisé en ce que** les autres zones de paroi du premier élément support (2) et/ou du second élément support (3) présentent des perçages.

6. Dispositif de support selon l'une des revendications 1 à 5, **caractérisé en ce que** les zones de paroi du premier élément support (2) et/ou du second élément support (3) présentent une conformation d'épaisseur plus ou moins grande, correspondant à leur fonction de support.

7. Dispositif de support selon l'une des revendications 1 à 6, **caractérisé en ce que** les zones de paroi du premier élément support (2) et/ou du second élément support (3) présentent un profil correspondant à leur fonction de support.

8. Dispositif de support selon l'une des revendications 1 à 7, **caractérisé en ce que** le premier élément support (2) est conformé en alliage d'aluminium par un procédé de fonderie.

9. Dispositif de support selon l'une des revendications 1 à 8, **caractérisé en ce que** le second élément support (3) est conformé en fonte à graphite sphéroïdal par un procédé de fonderie.
